# EUROPÄISCHE PATENTSCHRIFT

(11) **EP 1 249 994 B1**
(45) Veröffentlichungstag und Bekanntmachung des Hinweises auf die Patenterteilung: **02.09.2009**
(21) Anmeldenummer: 02100324.9
(22) Anmeldetag: 02.04.2002
(51) Int. Cl.: H04M 3/56, H04M 3/533

(54) **Verfahren zum Austausch von Nachrichten und Informationen im Rahmen einer Telefonkonferenz**
Method to exchange messages and information in a teleconference
Méthode pour l'échange de messages et d'informations dans une téléconférence

(30) Priorität: 09.04.2001 DE 10117679
(43) Veröffentlichungstag der Anmeldung: 16.10.2002
(73) Patentinhaber: SIEMENS AKTIENGESELLSCHAFT, 80333 München (DE)
(72) Erfinder: Mateu, Jordi, 17520, Puigcerda (ES)
(74) Vertreter: Fritzsche, Thomas

(56) Entgegenhaltungen:
- EP-A2- 0 817 457
- WO-A-99/20026
- WO-A-99/27701
- US-A- 4 577 065
- US-A- 5 619 555
- US-A- 5 818 836
- US-A- 6 072 780

## Beschreibung

Die Erfindung betrifft ein Verfahren zum Austausch von Nachrichten und Informationen im Rahmen einer Telefonkonferenz in einem Telekommunikationssystem mit einem Fernsprechnetz, über welches die Telefonkonferenz stattfindet.

Weiters betrifft die Erfindung ein Telekommunikationssystem, welches zum Austausch von Nachrichten bzw. Informationen im Rahmen einer Telefonkonferenz eingerichtet ist, mit einem Fernsprechnetz.

Telefonkonferenzschaltungen stellen ein häufig angebotenes Leistungsmerkmal von Netzbetreibern dar und bilden einen wichtigen Bestandteil des modernen Geschäftslebens, insbesondere dann, wenn die geographische Entfernung zwischen den Gesprächspartnern ein persönliches Treffen schwierig bzw. unmöglich macht.

Eine Realisierungsmöglichkeit einer Telefonkonferenzschaltung ist beispielsweise in dem IBM "Technical Disclosure Bulletin 77C 01761" beschrieben.

Bekannter Weise ist es im Rahmen von Telefonkonferenzen für die Teilnehmer nicht möglich, zusätzliches Nachrichten- oder Informationsmaterial, beispielsweise Bilder oder Videos, auszutauschen.

Zwar können bei Videokonferenzen, Sprach- und Bilddaten übertragen werden, jedoch müssen alle Teilnehmer über spezielle Telekommunikationseinrichtungen verfügen, die für eine Videokonferenz eingerichtet sind. Die Anschaffung derartiger Telekommunikationseinrichtungen ist jedoch mit sehr hohen Kosten verbunden. Auch hinsichtlich der Übertragungsqualität und Verbindungsstabilität weisen die bekannten Videokonferenzsysteme noch nicht die selben Eigenschaften wie eine Telefonkonferenzschaltung auf.

Ein Verfahren zum Austausch von Nachrichten und Informationen im Rahmen einer Telefonkonferenz ist aus der US 5 818 836 bekannt.

Ein Verfahren zum Übertragen von Bildern mittels Fax im Rahmen einer Telefonkonferenz ist aus dem IBM "Technical Disclosure Bulletin 95A 61562" bekannt geworden. Allerdings hat dieses Verfahren den großen Nachteil, dass keine Videodaten ausgetauscht werden können bzw. ein "Chatten" der Teilnehmer miteinander nicht möglich ist.

Zum Begriff des "Chattens" bzw. "Chatrooms" siehe beispielsweise die US 6 061 761, in der ein "Chatroom-System" in einem Computernetzwerk beschrieben ist. In diesem Zusammenhang ist auch die US 6 081 830 bekannt geworden, die ein Verfahren zur Verbindung mit programmspezifischen "Chatrooms" beschreibt.

Es ist daher eine Aufgabe der Erfindung, einen einfachen und kostengünstigen Weg zu schaffen, der es ermöglicht, auf einfache Weise im Rahmen einer Telefonkonferenz zusätzliche Nachrichten und Informationsmaterial zwischen Teilnehmern der Telefonkonferenz auszutauschen.

Diese Aufgabe wird mit einem Verfahren der eingangs genannten Art erfindungsgemäß dadurch gelöst, dass der Telefonkonferenz ein vorgebbarer Code zugewiesen wird, wobei der Telefonkonferenz eine auf einem Datennetz basierende Kommunikationsplattform zugeordnet ist, welche Dienste zur Nachrichten/Informationsübertragung in Form von Daten zwischen Teilnehmern der Telefonkonferenz anbietet, und der Zugang zu dieser Kommunikationsplattform mittels eines Passwortes erfolgt, welches aus dem Code abgeleitet und gemeinsam mit einer Zugangsadresse der Kommunikationsplattform an die Teilnehmer der Telefonkonferenz übermittelt wird, wobei die Teilnehmer das Passwort über das Datennetz an die Zugangsadresse übermitteln müssen, um Zugang zu der Kommunikationsplattform zu erhalten und Nachrichten bzw. Informationen mittels des zumindest einen Dienstes dieser Kommunikationsplattform miteinander auszutauschen.

Die Erfindung ermöglicht es, parallel zur Sprachübertragung mittels eines Fernsprechnetzes einen oder mehrere Dienste, die von einer Kommunikationsplattform angeboten werden zur Nachrichten/Informationsübertragung im Rahmen einer Telefonkonferenz zu verwenden. Mit dem erfindungsgemäßen Verfahren ist es ohne großen Aufwand möglich, während der Telefonkonferenz Daten, beispielsweise Bilddaten, zwischen den Teilnehmern auszutauschen. Durch die Zugangssicherung mittels eines telekonferenzspezifischen Passwortes zu der Kommunikationsplattform wird sicher gestellt, dass kein unbefugter, d.h. jemand, der nicht berechtigter Teilnehmer an der Telefonkonferenz ist, Zugang zu den ausgetauschten Daten bzw. Informationen hat.

Eine einfach zu realisierende Variante der Erfindung besteht darin, dass die Kommunikationsplattform Teil eines Call-Centers ist.

Eine vorteilhafte Variante der Erfindung sieht vor, dass das Datennetz das Internet ist und die Zugangsadresse eine IP-Adresse ist.
Weiters kann ein Zugangsserver vorgesehen sein, der einen Zugang zu der Kommunikationsplattform zur Verfügung stellt.

Weitere Vorteile lassen sich dadurch verwirklichen, dass die Kommunikationsplattform einen Dienst für eine Datenkonferenzschaltung bereitstellt.

Eine in der Praxis bewährte Ausführungsform der Erfindung sieht vor, dass die Kommunikationsplattform einen Dienst, der ein Chatten der Teilnehmer miteinander ermöglicht, bereitstellt.

Besonders günstig ist es, wenn die Kommunikationsplattform einen Dienst, der eine Übertragung von Bild- und/oder Videodaten ermöglicht, bereitstellt.

Günstigerweise stellt die Kommunikationsplattform einen Dienst bereit, der das Versenden und/oder Empfangen von e-Mails ermöglicht.

Um festzustellen, an welche Teilnehmer bereits Daten übermittelt werden können, werden einem Teilnehmer angezeigt, welche der anderen Teilnehmer ebenfalls Zugang zu dem zumindest einen Dienst haben.

Zur Durchführung des erfindungsgemäßen Verfahrens eignet sich insbesondere ein Telekommunikationssystem der eingangs genannten Art, welches dazu eingerichtet ist, der Telefonkonferenz einen vorgebbaren Code zuzuweisen, wobei der Telefonkonferenz eine auf einem Datennetz basierende Kommunikationsplattform zugeordnet ist, welche Dienste zur Nachrichten/Informationsübertragung in Form von Daten zwischen Teilnehmern der Telefonkonferenz aufweist, wobei das Telekommunikationssystem dazu eingerichtet ist, den Zugang zu dieser Kommunikationsplattform mittels eines Passwortes zu schützen und das Passwort aus dem Code abzuleiten und gemeinsam mit einer Zugangsadresse der Kommunikationsplattform an die Teilnehmer der Telefonkonferenz zu übermitteln, wobei die Kommunikationsplattform dazu eingerichtet ist, nach Übermittlung des Passwortes über das Datennetz von Seiten eines dem Datennetz zugeordneten Telekommunikationsendgerätes eines Teilnehmers für dieses Telekommunikationsendgerät den Zugang zu der Kommunikationsplattform zur Verfügung zu stellen.

Eine besonders günstige Variante der Erfindung besteht darin, dass ein Call-Center vorgesehen ist, welches dazu eingerichtet ist, eine Anmeldung für eine Telefonkonferenz entgegenzunehmen und der Telefonkonferenz den Code zuzuweisen sowie daraus das Passwort abzuleiten.

Weiters ist das Call-Center dazu eingerichtet, die Teilnehmer zu verständigen, dass eine Telefonkonferenz einberufen ist, und ihnen die Adresse des Zugangsservers und das Passwort zu übermitteln.

Die Erfindung samt weiteren Vorteilen wird im folgenden anhand einiger nicht einschränkender Ausführungsbeispiele näher erläutert, die in den Zeichnungen veranschaulicht sind.

In diesen zeigen schematisch:
- Fig. 1:: ein erfindungsgemäßes Telkommunikationssystem mit einer Kommunikationsplattform,
- Fig. 2:: eine Webseite eines Zugangsservers zu der Kommunikationsplattform,
- Fig. 3:: eine Darstellung einer Benutzeroberfläche der Kommunikationsplattform, und
- Fig. 4:: eine Darstellung einer weiteren Benutzeroberfläche der Kommunikationsplattform nach einem "Einloggen" eines Teilnehmers.

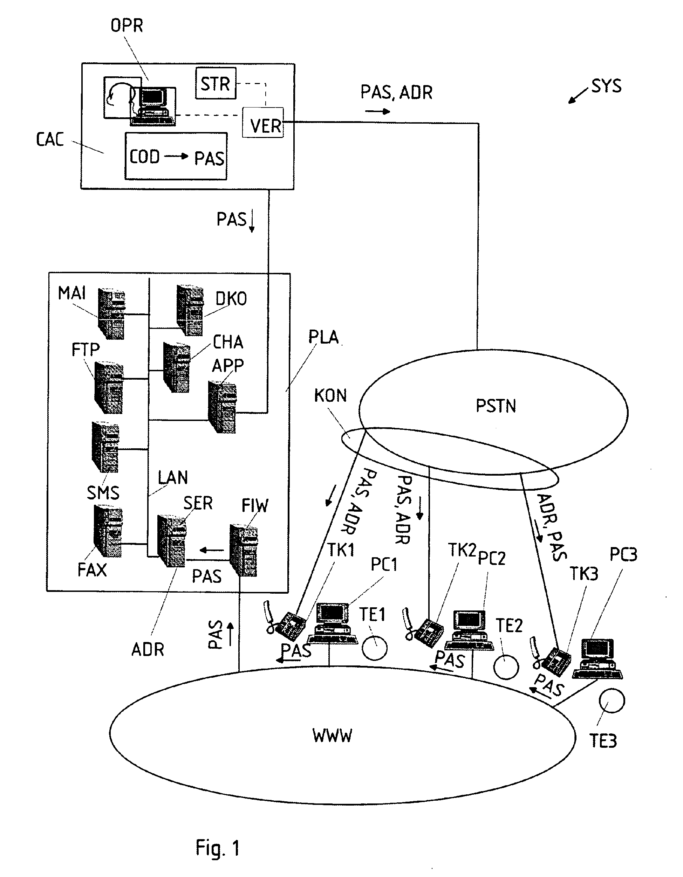

Gemäß Fig. 1 weist ein erfindungsgemäßes Telekommunikationssystem SYS ein Call-Center CAC auf welches dazu eingerichtet ist, einen Auftrag für eine Telefonkonferenz KON entgegenzunehmen und die Telefonkonferenz KON einzuberufen.

Das Call-Center CAC kann mit einer Kommunikationsplattform PLA, welche auf einem Datennetz WWW basiert, beispielsweise dem Internet, Verwaltungsdaten austauschen.

Über die Kommunikationsplattform PLA können Teilnehmer TEI einer Telefonkonferenz Datendienste, welche die Kommunikationsplattform PLA zur Verfügung stellt, zum gegenseitigen Austausch von Nachrichten und Informationen im Rahmen der Telefonkonferenz KON benutzen.

Um eine unbefugte Benutzung von Diensten der Kommunikationsplattform PLA und somit einen unerlaubten Zugriff auf die im Rahmen der Telefonkonferenz KON ausgetauschten Daten zu verhindern, ist der Zugang zu der Kommunikationsplattform PLA mittels eines Passwortes PAS geschützt.

Nach Entgegennahme eines Auftrages zur Einberufung einer Telefonkonferenz KON wird dieser ein Code COD zugewiesen. Aus diesem Code COD wird dann das oben erwähnte Passwort PAS abgeleitet, welches dem Kommunikationssystem SYS im Rahmen der Telefonkonferenz KON zugewiesen wird.

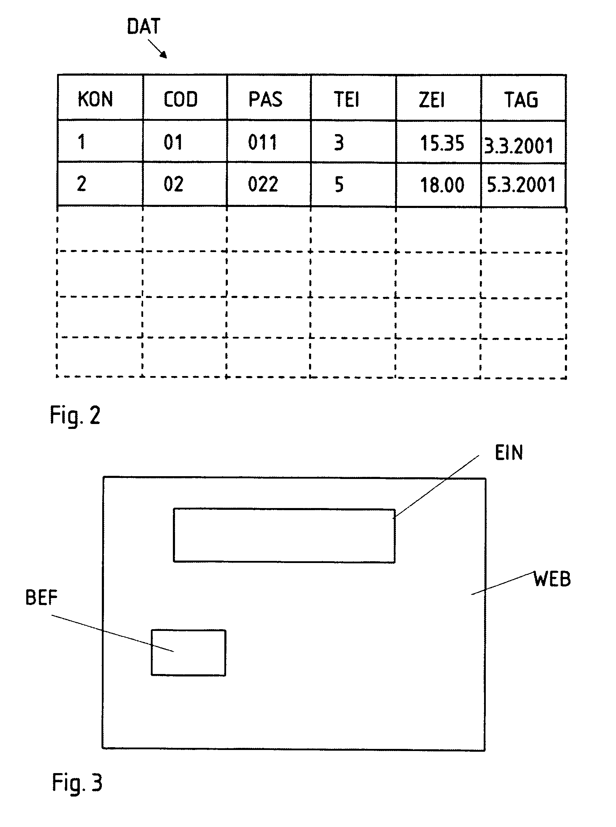

Hierzu kann das Passwort PAS von dem Call-Center CAC über eine Schnittstelle zu dem Datennetz WWW an einen Zugangsserver SER, der einen passwortgeschützten Zugang zu der Kommunikationsplattform PLA zur Verfügung stellt, übertragen werden. Der Zugangsserver SER kann das Passwort PAS in einer Datenbank DAT (siehe Fig. 2) speichern und zu Authentifizierungszwecken mit einem von einem Benutzer eingegebenen Passwort PAS vergleichen.

Diese Datenbank DAT kann beispielsweise den Code COD, für eine Telefonkonferenz KON, das aus dem Code abgeleitete Passwort PAS, sowie die Anzahl der Teilnehmer TEI und Informationen über Tag TAG und Uhrzeit ZEI der Telefonkonferenz enthalten.

Das Passwort PAS und die Datennetzadresse ADR des Zugangsservers SER wird von dem Call-Center CAC an die Teilnehmer TE1, TE2, TE3 zugestellt. Jeder Teilnehmer TE1, TE2, TE3 kann mittels eines dem Datennetz WWW zugeordneten Telekommunikationsendgerätes, beispielsweise einen mit dem Internet verbundenen Computer PCO, das Passwort PAS an die IP-Adresse des Zugangsservers SER übermitteln. Der Zugangsserver SER überprüft das Passwort PAS und der Teilnehmer TEI erhält nach positivem Überprüfungsergebnis Zugang zu der Kommunikationsplattform PLA.

Für Teilnehmer TE1, TE2, TE3 an der Telefonkonferenz KON ist es, wenn sie einen Zugang zu der Kommunikationsplattform PLA erlangt haben, möglich miteinander Daten in Form von Bildern oder Textnachrichten auszutauschen. Weiters ermöglicht die Kommunikationsplattform PLA ein Chatten der Teilnehmer TE1, TE2, TE3 miteinander.

Im folgenden soll das erfindungsgemäße Verfahren, für den Fall, dass das Datennetz WWW das Internet ist, erläutert werden.

Zur Durchführung des erfindungsgemäßen Verfahrens sind von Seiten eines Teilnehmerendgerätes zwei getrennte Telekommunikationsfunktionen notwendig eine dieser Funktionen ist für die Sprachübertragung über ein Fernsprechnetz PSTN, beispielsweise das PSTN-Netz, eingerichtet die andere Funktion ist zum Datenaustausch über das Internet eingerichtet.

Prinzipiell ist es möglich die beiden Funktionen in einem Endgerät zu verwirklichen. Hier wird jedoch auf eine Ausführungsform Bezug genommen, in der die beiden Funktionen unterschiedlichen Telekommunikationsendgeräten zugeordnet sind, ein Telefon TK1, TK2, TK3 das mit dem PSTN-Netz verbunden ist und ein Computer PC1, PC2, PC3 der mit dem Internet WWW verbunden ist.

Ein erster Teilnehmer TE1 möchte eine Telefonkonferenz KON mit beispielsweise zwei anderen Benutzern TE2, TE3 einberufen. Zu diesem Zweck kann er beispielsweise über das Internet WWW eine Webseite seines Netzbetreibers aufrufen und dort eine Option Telefonkonferenz "anklicken". In dem Browser des ersten Teilnehmers TE1 kann hierauf ein Formular erscheinen in welchem er Datum und Uhrzeit sowie Anzahl, Namen und Telefonnummern gegebenenfalls auch die e-Mailadressen der gewünschten Teilnehmer TE2, TE3 angibt.

Eine andere Möglichkeit besteht darin, dass er bei dem Call-Center über das PSTN-Netz anruft und fernmündlich seinen Auftrag für eine Telefonkonferenzschaltung mit den anderen teilnehmen TE2, TE3 gibt.

Das Call-Center CAC merkt den Zeitraum für den Beginn der Telefonkonferenz KON sowie die Namen und Telefonnummern, gegebenenfalls auch die e-Mailadressen der Teilnehmer TE1, TE2, TE3 vor und weist der Telefonkonferenz KON den Code COD zu.

Dieser Code COD dient vor allem zur Verwaltung von Telefonkonferenzen KON in dem Call-Center CAC.

Um verschiedene Dienste MAI, FTP, SMS, FAX, DKO, CHA im Rahmen der Telefonkonferenz KON anbieten zu können, weist die Kommunikationsplattform PLA einen Application-Server APP auf, der die gesamte Dienstesteuerung übernimmt.

Der Application Server APP ist über ein Local Area Network oder kurz LAN mit dem Zugangsserver SER, auf dem in einer bevorzugten Ausführungsform der Erfindung, eine Webseite abgelegt ist, über welche der Zugang zu der Kommunikationsplattform PLA erfolgt, einem FTP-Server FTP und einem e-Mail MAI bzw. Fax FAX und einem SMS-Server SMS sowie mit einem Server DKO, der eine Datenkonferenzschaltung der Teilnehmer TE1, TE2, TE3 ermöglicht, der Kommunikationsplattform PLA verbunden.

Über den FTP-Server können Dateien, Bild- oder Videodaten gemäß dem FTP-Protokoll zwischen den Teilnehmern der Telefonkonferenz ausgetauscht werden, während über den e-Mail- bzw. Fax- und SMS-Server e-Mail- Fax- und SMS-Nachrichten ausgetauscht werden können.

Zur Sicherung der Kommunikationsplattform PLA vor unerlaubten Zugriff kann eine sogenannte "Firewall" FIW vorgesehen sein.

Prinzipiell kann die Kommunikationsplattform PLA in das Call-Center CAC integriert sein.

Das Call-Center CAC weist eine Vermittlungsstelle VER für das PSTN-Netz auf, welche die Telefonkonferenzschaltung zwischen den Teilnehmern TE1, TE2, TE3 aufbaut.

Ein Operator OPR oder eine dafür eingerichtete Steuerung des Call-Centers CAC übermittelt anhand der von dem ersten Teilnehmer TE1 angegebenen Telefonnummern oder e-Mailadressen die IP-Adresse ADR des Servers SER, auf welchem die Webseite abgelegt ist, bzw. die IP-Adresse der Webseite und das Passwort PAS an die Teilnehmer TE1, TE2, TE3.

Die Übermittlung des Passwortes PAS und der IP-Adresse der Webseite kann prinzipiell vor oder nach Herstellung der Telefonkonferenzschaltung KON erfolgen. Zur Zustellung des Passwortes PAS kann die Vermittlungsstelle VER eine Verbindung zwischen einer Steuerung STR des Call-Centers CAC oder einem Operator und den dem PSTN-Netz zugeordneten Telekommunikationsendgeräten TK1, TK2, TK3 der Teilnehmer TE1, TE2, TE3 an der Telefonkonferenz KON herstellen.

Eine andere Möglichkeit der Zustellung besteht darin, dass die Steuerung die IP-Adresse ADR des Zugangsservers SER und das Passwort PAS als e-Mail zustellt. Die Übermittlung von IP-Adresse ADR und Passwort PAS kann auch als SMS- oder Fax-Nachricht erfolgen.

Die Benutzung der Kommunikationsplattform PLA kann allerdings erst nach Beginn der Telefonkonferenz KON erfolgen, da das Passwort PAS erst mit dem Zeitpunkt für den die Telefonkonferenz KON einberufen ist, Gültigkeit erlangt.

Die Teilnehmer TE1, TE2, TE3 an der Telefonkonferenz KON können nach Erhalt des Passwortes PAS und der IP-Adresse ADR über den Zugangsserver SER in die Kommunikationsplattform PLA einloggen, wodurch sie, wie bereits oben erwähnt für die Dauer der Telefonkonferenz KON, die Berechtigung zur Benutzung der Dienste MAI, FTP, SMS, FAX, DKO, CHA des Kommunikationsplattform PLA erwerben.

Gemäß Fig. 3 kann das Einloggen, wie bereits oben erwähnt, über eine Webseite WEB, die auf dem Zugangsserver SER abgelegt ist, erfolgen. Hierbei kann das Passwort PAS über ein entsprechendes Eingabefeld EIN der Webseite WEB eingegeben werden. Ein derartiges Vorgehen ist dem Fachmann beispielsweise von den eingangs erwähnten "Chatrooms" her bekannt.

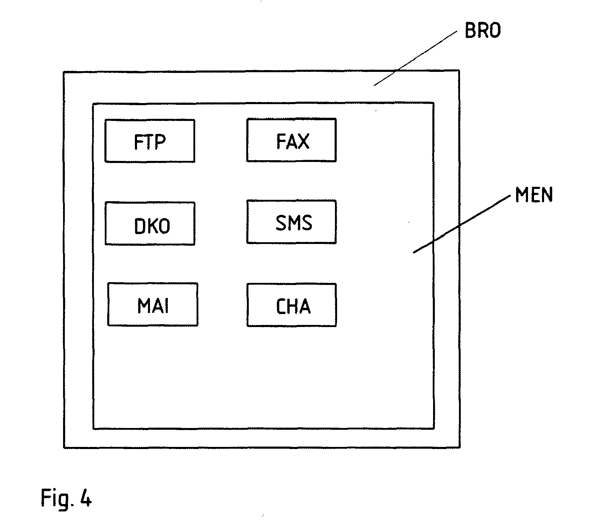

Nach Fig. 4 kann beispielsweise nach "Einloggen" in die Kommunikationsplattform PLA auf einem Computerbildschirm eines Teilnehmers in einem Internetbrowser BRO eine Menü/Steuerungsseite erscheinen, auf welcher die Namen aller eingeloggten Teilnehmer TE1, TE2, TE3 zu sehen ist, erscheinen. Da der Datenaustausch zwischen den Teilnehmern TE1, TE2, TE3 über die Kommunikationsplattform PLA erfolgt ist es nicht notwendig, dass die Teilnehmer TE1, TE2, TE3 bzw. deren Telekommunikationsendgeräte PC1, PC2, PC3 die IP-Adressen der anderen Teilnehmer TE1, TE2, TE3 bzw. ihrer Telekommunikationsendgeräte PC1, PC2, PC3 kennen.

Verschiedene Dienste MAI, FTP, SMS, FAX, DKO, CHA und Übertragungsarten, die von der Kommunikationsplattform PLA bereitgestellt werden, können über diese Menü/Steuerungsseite MEN aktiviert werden. So kann der eingeloggte Teilnehmer durch Anklicken eines entsprechenden Menüpunktes der Menü/Steuerungsseite entscheiden, ob er Videodaten, Bilddaten, Textdaten oder Dateien verschicken will. Je nach ausgewählter Art der zu verschickenden Daten, wird von der Kommunikationsplattform PLA unter Verwendung eines der oben genannten Dienste MAI, FTP, SMS, FAX, DKO, CHA der Datenaustausch zwischen den Teilnehmern TE1, TE2, TE3 bewerkstelligt.

Ebenso besteht die Möglichkeit durch Aktivierung des entsprechenden Menüpunktes CHA mit einem oder mehreren der Teilnehmer TE1, TE2, TE3 zu chatten oder FAX-, SMS- oder e-Mail-Nachrichten MAI an die Teilnehmer TE1, TE2, TE3 der Telefonkonferenz KON zu versenden.

Dem Fachmann sind zahlreiche Programme bekannt, welche die soeben erwähnten Leistungsmerkmale bzw. Dienste zur Verfügung stellen. Ein derartiges Programm bzw. eine derartige Kommunikationsplattform stellt beispielsweise "ICQ" dar. Ein anderes derartiges Programm ist "NetMeeting" der Firma Microsoft.

Im Gegensatz zu den beiden soeben genannten Programmen muss bei dem erfindungsgemäßen Verfahren jedoch die IP-Adresse eines Teilnehmers TE1, TE2, TE3 nicht an die anderen Teilnehmer TE1, TE2, TE3 übertragen werden, um einen Datenaustausch zwischen ihnen zu ermöglichen. Die Übertragung der IP-Adressen jedes Teilnehmers TE1, TE2, TE3 an die anderen Teilnehmer TE1, TE2, TE3 kann, vor allem dann, wenn den Teilnehmern dynamische IP-Adressen zugeordnet sind, bekannterweise mit Komplikationen in Bezug auf die Datenübertragung bzw. das Routen verbunden sein.

Ein weiterer Vorteil des erfindungsgemäßen Verfahren besteht darin, dass die Installation einer speziellen Software auf einem Endgerät eines Teilnehmers TE1-TE3 nicht notwendig ist und der Zugang zu der Kommunikationsplattform PLA durch ein dynamisches, telefonkonferenzspezifisches Passwort geschützt wird.

Aus diesem Grund wird nur die (statische) IP-Adresse ADR der Kommunikationsplattform PLA bzw. des Zugangsservers SER an die Teilnehmer TE1-TE3 der Telefonkonferenz KON übermittelt. Der Austausch von Daten erfolgt dann über diese Adresse, d.h. die Teilnehmer an einer Telefonkonferenz KON brauchen, ähnlich wie beim bekannten Chatten, die IP-Adressen der anderen Teilnehmer TE1-TE3 nicht zu kennen. Das Weiterrouten der ausgetauschten Daten bzw. Nachrichten übernimmt die Kommunikationsplattform PLA.

Am Ende der Telefonkonferenz KON loggen die Teilnehmer aus der Kommunikationsplattform PLA wieder aus. Das Ausloggen kann beispielsweise durch Anklicken eines entsprechenden Menüpunktes auf der Webseite WEB oder auch automatisch durch das Call-Center CAC erfolgen. Erfolgt das Ausloggen durch das Call-Center CAC, so kann bei Beendigung der Telefonkonferenz KON von der Steuerung STR ein entsprechendes Beendigungssignal generiert werden, welches der Kommunikationsplattform PLA mitteilt, dass sie für die Telefonkonferenz nicht mehr länger zur Verfügung stehen soll.

## Patentansprüche

1. Verfahren zum Austausch von Nachrichten und Informationen im Rahmen einer Telefonkonferenz (KON) in einem Telekommunikationssystem (SYS) mit einem Fernsprechnetz (PSTN), über welches die Telefonkonferenz (KON) stattfindet,
und der Telefonkonferenz (KON) ein vorgebbarer Code (COD) zugewiesen wird,
**dadurch gekennzeichnet, dass**
- der Telefonkonferenz (KON) eine auf einem Datennetz (WWW) basierende Kommunikationsplattform (PLA) zugeordnet ist, welche zumindest einen Dienst (MAI, FTP, SMS, FAX, DKO, CHA) zur Nachrichten/Informationsübertragung in Form von Daten (DAT) zwischen Teilnehmern (TE1, TE2, TE3) der Telefonkonferenz (KON) anbietet, und der Zugang zu dieser Kommunikationsplattform (PLA) mittels eines Passwortes (PAS) erfolgt, welches aus dem Code (COD) abgeleitet und gemeinsam mit einer Zugangsadresse (ADR) der Kommunikationsplattform (PLA) an die Teilnehmer (TE1, TE2, TE3) der Telefonkonferenz (KON) vom Telekommunikationssystem (SYS) zugestellt wird,
und die Teilnehmer (TE1, TE2, TE3) das Passwort (PAS) über das Datennetz (WWW) an die Zugangsadresse (ADR) übermitteln' müssen, um Zugang zu der Kommunikationsplattform (PLA) zu erhalten und Nachrichten bzw. Informationen mittels des zumindest einen Dienstes (MAI, FTP, SMS, FAX, DKO, CHA) dieser Kommunikationsplattform (PLA) miteinander auszutauschen.

2. Verfahren nach Anspruch 1
**dadurch gekennzeichnet,**
**dass** die Kommunikationsplattform (PLA) Teil eines Call-Centers (CAC) ist.

3. Verfahren nach Anspruch 1 oder 2,
**dadurch gekennzeichnet,**
**dass** das Datennetz (WWW) das Internet ist und die Zugangsadresse (ADR) eine IP-Adresse ist.

4. Verfahren nach Anspruch 3,
**dadurch gekennzeichnet,**
**dass** ein Zugangsserver (SER) vorgesehen ist, der einen Zugang zu der Kommunikationsplattform (PLA) zur Verfügung stellt.

5. Verfahren nach einem der Ansprüche 1 bis 4,
**dadurch gekennzeichnet,**
**dass** die Kommunikationsplattform (PLA) einen Dienst (DIE) für eine Datenkonferenzschaltung bereitstellt.

6. Verfahren nach einem der Ansprüche 1 bis 3,
**dadurch gekennzeichnet,**
**dass** die Kommunikationsplattform (PLA) einen Dienst, der ein Chatten der Teilnehmer miteinander ermöglicht, bereitstellt.

7. Verfahren nach einem der Ansprüche 1 bis 4,
**dadurch gekennzeichnet,**
**dass** die Kommunikationsplattform (PLA) einen Dienst, der eine Übertragung von Bild- und/oder Videodaten ermöglicht, bereitstellt.

8. Verfahren nach einem der Ansprüche 1 bis 5,
**dadurch gekennzeichnet,**
**dass** die Kommunikationsplattform (PLA) einen Dienst, der das Versenden und/oder Empfangen von e-Mails ermöglicht, bereitstellt.

9. Verfahren nach einem der Ansprüche 1 bis 6,
**dadurch gekennzeichnet,**
**dass** einem Teilnehmer angezeigt wird, welche der anderen Teilnehmer ebenfalls Zugang zu dem Kommunikationsplattform (PLA) haben.

10. Verfahren nach einem der Ansprüche 1 bis 7,
**dadurch gekennzeichnet,**
**dass** die Telefonkonferenz in einem Call-Center (CAC) angemeldet wird, welches der Telefonkonferenz den Code (COD) zuweist und daraus das Passwort (PAS) ableitet.

11. Verfahren nach Anspruch 8,
**dadurch gekennzeichnet,**
**dass** das Call-Center die Teilnehmer verständigt, dass eine Telefonkonferenz einberufen ist, und ihnen die Adresse (ADR) des Zugangsservers (SER) und das Passwort (PAS) übermittelt.

12. Telekommunikationssystem (SYS), welches zum Austausch von Nachrichten bzw. Informationen im Rahmen einer Telefonkonferenz (KON) eingerichtet ist, mit einem Fernsprechnetz (PSTN), wobei es dazu eingerichtet ist, der Telefonkonferenz (KON) einen vorgebbaren Code (COD) zuzuweisen,
**dadurch gekennzeichnet, dass**
- der Telefonkonferenz (KON) eine auf einem Datennetz (WWW) basierende Kommunikationsplattform (PLA) zugeordnet ist, welche zumindest einen Dienst (MAI, FTP SMS, FAX, DKO, CHA) zur Nachrichten/Informationsübertragung in Form von Daten (DAT) zwischen Teilnehmern (TE1, TE2, TE3) der Telefonkonferenz (KON) aufweist,
- wobei das Telekommunikationssystem (SYS) dazu eingerichtet ist, den Zugang zu dieser Kommunikationsplattform (PLA) mittels eines Passwortes (PAS) zu schützen und das Passwort (PAS) aus dem Code (COD) abzuleiten und gemeinsam mit einer Zugangsadresse (ADR) der Kommunikationsplattform (PLA) an die Teilnehmer (TE1, TE2, TE3) der Telefonkonferenz (KON) zuzustellen,
und die Kommunikationsplattform (PLA) dazu eingerichtet ist, nach Übermittlung des Passwortes (PAS) über das Datennetz (WWW) von Seiten eines dem Datennetz (WWW) zugeordneten Telekommunikationsendgerätes (TK1, Tk2, TK3, PC1, PC2, PC3) eines Teilnehmers (TE1, TE2, TE3) für dieses Telekommunikationsendgerät (TK1, Tk2, TK3, PC1, PC2, PC3) den Zugang zu dem zumindest einen Dienst (MAI, FTP, SMS, FAX, DKO, CHA) zur Verfügung zu stellen.

13. Telekommunikationssystem nach Anspruch 12,
**dadurch gekennzeichnet,**
**dass** die Kommunikationsplattform Teil eines Call-Centers ist.

14. Telekommunikationssystem nach Anspruch 12 oder 13,
**dadurch gekennzeichnet,**
**dass** das Datennetz (WWW) das Internet ist und die Zugangsadresse (ADR) eine IP-Adresse ist.

15. Telekommunikationssystem nach einem der Ansprüche 12 bis 14,
**dadurch gekennzeichnet,**
**dass** ein Zugangsserver (SER) vorgesehen ist, der dazu eingerichtet ist, einen Zugang zu der Kommunikationsplattform (PLA) zur Verfügung zu stellen.

16. Telekommunikationssystem nach einem der Ansprüche 12 bis 15,
**dadurch gekennzeichnet,**
**dass** die Kommunikationsplattform (PLA) dazu eingerichtet ist, einen Dienst (DIE) für eine Datenkonferenzschaltung bereitzustellen.

17. Telekommunikationssystem nach einem der Ansprüche 12 bis 16,
**dadurch gekennzeichnet,**
**dass** die Kommunikationsplattform (PLA) dazu eingerichtet ist, einen Dienst, zum Chatten der Teilnehmer miteinander bereitzustellen.

18. Telekommunikationssystem nach einem der Ansprüche 12 bis 17,
**dadurch gekennzeichnet,**
**dass** die Kommunikationsplattform (PLA) dazu eingerichtet ist, einen Dienst zur Übertragung von Bild- und/oder Videodaten, bereitzustellen.

19. Telekommunikationssystem nach einem der Ansprüche 12 bis 18,
**dadurch gekennzeichnet,**
**dass** die Kommunikationsplattform (PLA) dazu eingerichtet ist, einen Dienst, zum Versenden und/oder Empfangen von e-Mails bereitzustellen.

20. Telekommunikationssystem nach Anspruch 19,
**dadurch gekennzeichnet,**
**dass** die Kommunikationsplattform (PLA) dazu eingerichtet ist, einem Teilnehmer anzuzeigen, welche der anderen Teilnehmer ebenfalls Zugang zu der Kommunikationsplattform (PLA) haben.

21. Telekommunikationssystem nach einem der Ansprüche 13 bis 20,
**dadurch gekennzeichnet,**
**dass** es ein Call-Center (CAC) aufweist, welches dazu eingerichtet ist, eine Anmeldung für eine Telefonkonferenz (KON) entgegenzunehmen, und der Telefonkonferenz den Code (COD) zuzuweisen und daraus das Passwort (PAS) abzuleiten.

22. Telekommunikationssystem nach Anspruch 21,
**dadurch gekennzeichnet,**
**dass** das Call-Center dazu eingerichtet ist, die Teilnehmer (TE1, TE2, TE3) zu verständigen, dass eine Telefonkonferenz (KON) einberufen ist, und ihnen die Zugangsadresse (ADR) und das Passwort (PAS) übermitteln.

## Claims

1. Method for exchanging messages and information in a teleconference (KON) in a telecommunications system (SYS) with a telephone network (PSTN) via which the teleconference (KON) takes place, and a presettable code (COD) is assigned to the teleconference (KON), **characterized in that**
- a communication platform (PLA) based on a data network (WWW) is associated with the teleconference (KON), said communication platform offering at least one service (MAI, FTP, SMS, FAX, DKO, CHA) for message/information transmission in the form of data (DAT) between subscribers (TE1, TE2, TE3) to the teleconference (KON), and the access to said communication platform (PLA) is effected by means of a password (PAS), which is derived from the code (COD) and together with an access address (ADR) of the communication platform (PLA) is transmitted to the subscribers (TE1, TE2, TE3) to the teleconference (KON) by the telecommunications system (SYS), and the subscribers (TE1, TE2, TE3) have to transmit the password (PAS) via the data network (WWW) to the access address (ADR) in order to obtain access to the communication platform (PLA) and to exchange messages or information with one another by means of the at least one service (MAI, FTP, SMS, FAX, DKO, CHA) of said communication platform (PLA).

2. Method according to Claim 1, **characterized in that** the communication platform (PLA) is part of a call centre (CAC).

3. Method according to Claim 1 or 2, **characterized in that** the data network (WWW) is the Internet and the access address (ADR) is an IP address.

4. Method according to Claim 3, **characterized in that** there is provided an access server (SER) that makes available access to the communication platform (PLA).

5. Method according to one of Claims 1 to 4, **characterized in that** the communication platform (PLA) provides a service (DIE) for a data conference circuit.

6. Method according to one of Claims 1 to 3, **characterized in that** the communication platform (PLA) provides a service (DIE) that makes it possible for the subscribers to chat to one another.

7. Method according to one of Claims 1 to 4, **characterized in that** the communication platform (PLA) provides a service (DIE) that makes it possible to transmit image data and or video data.

8. Method according to one of Claims 1 to 5, **characterized in that** the communication platform provides a service (DIE) that makes it possible to send and/or receive e-mails.

9. Method according to one of Claims 1 to 6, **characterized in that** it is indicated to the subscriber which of the other subscribers also have access to the communication platform (PLA).

10. Method according to one of Claims 1 to 7, **characterized in that** the teleconference is registered in a call centre (CAC), which assigns the code (COD) to the teleconference and uses the code to derive the password (PAS).

11. Method according to Claim 8, **characterized in that** the call centre notifies the subscribers that a teleconference has been called, and transmits the address (ADR) of the access server (SER) and the password (PAS) to them.

12. Telecommunications system (SYS), which is set up to exchange messages or information in a teleconference (KON), with a telephone network (PSTN), wherein it is set up to assign a presettable code (COD) to the teleconference (KON), **characterized in that**
- a communication platform (PLA) based on a data network (WWW) is associated with the teleconference (KON), said communication platform having at least one service (MAI, FTP, SMS, FAX, DKO, CHA) for message/information transmission in the form of data (DAT) between subscribers (TE1, TE2, TE3) to the teleconference (KON),
- wherein the telecommunications system (SYS) is set up to protect the access to said communication platform (PLA) by means of a password (PAS) and to derive the password (PAS) from the code (COD) and to transmit it together with an access address (ADR) of the communication platform (PLA) to the subscribers (TE1, TE2, TE3) of the teleconference (KON),
- and the communication platform (PLA) is set up to provide access to the at least one service (MAI, FTP, SMS, FAX, DKO, CHA), after transmitting the password (PAS) via the data network (WWW) from a telecommunications terminal (TK1, TK2, TK3, PC1, PC2, PC3), which is associated with the data network (WWW), of a subscriber (TE1, TE2, TE3) for this telecommunications terminal (TK1, TK2, TK3, PC1, PC2, PC3).

13. Telecommunications system according to Claim 12, **characterized in that** the communication platform is part of a call centre.

14. Telecommunications system according to Claim 12 or 13, **characterized in that** the data network (WWW) is the Internet and the access address (ADR) is an IP address.

15. Telecommunications system according to one of claims 12 to 14, **characterized in that** there is provided an access server (SER) which is set up to make available access to the communication platform (PLA).

16. Telecommunications system according to one of Claims 12 to 15, **characterized in that** the communication platform (PLA) is set up to provide a service (DIE) for a data conference circuit.

17. Telecommunications system according to one of Claims 12 to 16, **characterized in that** the communication platform (PLA) is set up to provide a service for the subscribers to chat to one another.

18. Telecommunications system according to one of Claims 12 to 17, **characterized in that** the communication platform (PLA) is set up to provide a service for transmitting image data and/or video data.

19. Telecommunications system according to one of Claims 12 to 18, **characterized in that** the communication platform (PLA) is set up to provide a service for sending and/or receiving e-mails.

20. Telecommunications system according to Claim 19, **characterized in that** the communication platform (PLA) is set up to indicate to a subscriber which of the other subscribers also have access to the communication platform (PLA).

21. Telecommunications system according to one of Claims 13 to 20, **characterized in that** said system has a call centre (CAC) which is set up to receive a request for a teleconference (KON), and to assign the code (COD) to the teleconference and to derive the password (PAS) from the code.

22. Telecommunications system according to Claim 21, **characterized in that** the call centre is set up to notify the subscribers (TE1, TE2, TE3) that a teleconference (KON) has been called, and to transmit the access address (ADR) and the password (PAS) to them.

## Revendications

1. Procédé pour l'échange de messages et d'informations dans le cadre d'une téléconférence (KON) dans un système de télécommunication (SYS) avec un réseau téléphonique (PSTN) par le biais duquel la téléconférence (KON) a lieu et un code prédéfini (COD) est affecté à la téléconférence (KON), **caractérisé en ce que**
une plate-forme de communication (PLA), qui est basée sur un réseau de données (WWW) et qui offre au moins un service (MAI, FTP, SMS, FAX, DKO, CHA) pour transmettre des messages et/ou des informations sous forme de données (DAT) entre des participants (TE1, TE2, TE3) de la téléconférence (KON), est associée à la téléconférence (KON), et l'accès à cette plate-forme de communication (PLA) se fait au moyen d'un mot de passe (PAS) qui est dérivé du code (COD) et remis conjointement avec une adresse d'accès (ADR) de la plate-forme de communication (PLA) aux participants (TE1, TE2, TE3) de la téléconférence (KON) du système de télécommunication,
et **en ce que** les participants (TE1, TE2, TE3) doivent communiquer le mot de passe (PAS) par le biais du réseau de données (WWW) à l'adresse d'accès (ADR) afin d'obtenir l'accès à la plate-forme de communication (PLA) et afin d'échanger entre eux des messages respectivement des informations au moyen d'au moins un desdits services (MAI, FTP, SMS, FAX, DKO, CHA) de cette plate-forme de communication (PLA).

2. Procédé selon la revendication 1, **caractérisé en ce que** la plate-forme de communication (PLA) fait partie d'un centre d'appels (CAC).

3. Procédé selon la revendication 1 ou 2, **caractérisé en ce que** le réseau de données (WWW) est l'Internet et que l'adresse d'accès (ADR) est une adresse IP.

4. Procédé selon la revendication 3, **caractérisé en ce qu'**il est prévu un serveur (SER) qui met à disposition un accès à la plate-forme de communication (PLA).

5. Procédé selon l'une quelconque des revendications 1 à 4, **caractérisé en ce que** la plate-forme de communication (PLA) met à disposition un service (DIE) pour un circuit de conférence de données.

6. Procédé selon l'une quelconque des revendications 1 à 3, **caractérisé en ce que** la plate-forme de communication (PLA) met à disposition un service qui permet un dialogue en ligne entre les participants.

7. Procédé selon l'une quelconque des revendications 1 à 4, **caractérisé en ce que** la plate-forme de communication (PLA) met à disposition un service qui permet une transmission de données image et/ou vidéo.

8. Procédé selon l'une quelconque des revendications 1 à 5, **caractérisé en ce que** la plate-forme de communication (PLA) met à disposition un service qui permet l'envoi et/ou la réception de courriers électroniques.

9. Procédé selon l'une quelconque des revendications 1 à 6, **caractérisé en ce qu'**il est affiché à un participant les autres participants qui ont également accès à la plate-forme de communication (PLA).

10. Procédé selon l'une quelconque des revendications 1 à 7, **caractérisé en ce que** la téléconférence est réservée dans un centre d'appels (CAC) qui affecte le code (COD) à la téléconférence et en dérive le mot de passe (PAS).

11. Procédé selon la revendication 8, **caractérisé en ce que** le centre d'appels informe les participants qu'ils sont convoqués à une téléconférence et leur communique l'adresse (ADR) du serveur d'accès (SER) et le mot de passe (PAS).

12. Système de télécommunication (SYS), qui est arrangé pour l'échange de messages respectivement d'informations dans le cadre d'une téléconférence (KON), avec un réseau téléphonique (PSTN), ledit système étant arrangé pour affecter un code prédéfini (COD) à la téléconférence (KON), **caractérisé en ce que**
- une plate-forme de communication (PLA) basée sur un réseau de données (WWW) est associée à la téléconférence (KON), ladite plate-forme comporte au moins un service (MAI, FTP, SMS, FAX, DKO, CHA) permettant la transmission de messages et/ou d'informations sous forme de données (DAT) entre des participants (TE1, TE2, TE3) de la téléconférence (KON),
- le système de télécommunication (SYS) étant arrangé pour protéger l'accès à cette plate-forme de communication (PLA) au moyen d'un mot de passe (PAS) et que le mot de passe (PAS) est déduit du code (COD) et remis conjointement avec une adresse d'accès (ADR) de la plate-forme de communication (PLA) aux participants (TE1, TE2, TE3) de la téléconférence (KON),
- et la plate-forme de communication (PLA) est arrangée, après la communication du mot de passe (PAS) par le biais du réseau de données (WWW) depuis le côté, associé au réseau de données (WWW), d'un appareil de télécommunication (TK1, TK2, TK3, PC1, PC2, PC3) d'un participant (TE1, TE2, TE3) pour mettre à disposition pour cet appareil de télécommunication (TK1, TK2, TK3, PC1, PC2, PC3) l'accès à au moins un des services (MAI, FTP, SMS, FAX, DKO, CHA).

13. Système de télécommunication selon la revendication 12, **caractérisé en ce que** la plate-forme de communication fait partie d'un centre d'appels.

14. Système de télécommunication selon la revendication 12 ou 13, **caractérisé en ce que** le réseau de données (WWW) est l'Internet et l'adresse d'accès (ADR) est une adresse IP.

15. Système de télécommunication selon l'une quelconque des revendications 12 à 14, **caractérisé en ce qu'**il est prévu un serveur d'accès (SER) qui est arrangé pour mettre à disposition un accès à la plate-forme de communication (PLA).

16. Système de télécommunication selon l'une quelconque des revendications 12 bis 15, **caractérisé en ce que** la plate-forme de communication (PLA) est arrangée pour mettre à disposition un service (DIE) pour un circuit de conférence de données.

17. Système de télécommunication selon l'une quelconque des revendications 12 à 16, **caractérisé en ce que** la plate-forme de communication (PLA) est arrangée pour mettre à disposition un service permettant un dialogue en ligne des participants entre eux.

18. Système de télécommunication selon l'une quelconque des revendications 12 à 17, **caractérisé en ce que** la plate-forme de communication (PLA) est arrangée pour mettre à disposition un service permettant la transmission de données images et/ou vidéo.

19. Système de télécommunication selon l'une quelconque des revendications 12 à 18, **caractérisé en ce que** la plate-forme de communication (PLA) est arrangée pour mettre à disposition un service permettant d'envoyer et/ou de recevoir des courriers électroniques.

20. Système de télécommunication selon la revendication 19, **caractérisé en ce que** la plate-forme de communication (PLA) est arrangée pour afficher à un participant les autres participants qui ont également accès à la plate-forme de communication (PLA).

21. Système de télécommunication selon l'une quelconque des revendications 13 à 20, **caractérisé en ce qu'**il comporte un centre d'appels (CAC) qui est arrangé pour recevoir une réservation pour une téléconférence (KON) et pour affecter le code (COD) à la téléconférence et en dériver le mot de passe (PAS).

22. Système de télécommunication selon la revendication 21, **caractérisé en ce que** le centre d'appels est arrangé pour informer les participants (TE1, TE2, TE3) qu'ils sont convoqués à une téléconférence (KON) et leur communiquer l'adresse d'accès (ADR) et le mot de passe (PAS).
